# EUROPEAN PATENT SPECIFICATION

(11) **EP 1 922 201 B1**
(45) Date of publication and mention of the grant of the patent: **02.04.2014**
(21) Application number: 06784100.7
(22) Date of filing: 17.08.2006
(51) Int. Cl.: B29C 45/14, F16K 27/02

(54) **A PROCESS FOR MANUFACTURING A VALVE**
VERFAHREN ZUR HERSTELLUNG EINES VENTILS
PROCEDE DE FABRICATION DE VANNE

(30) Priority: 09.09.2005 SE 0501997
(43) Date of publication of application: 21.05.2008
(73) Proprietor: Arca Systems International AB, 284 22 Perstorp (SE)
(72) Inventor: LJUNGBECK, Kurt, SE-294 32 Sölvesborg (SE); KNUTSSON, Anders, S-290 34 Fjälkinge (SE)
(74) Representative: HOFFMANN EITLE
(86) International application number: PCT/SE2006/000954
(87) International publication number: WO 2007/030052

(56) References cited:
- EP-A1- 1 362 692
- WO-A1-87/05373
- WO-A1-98/46918
- WO-A1-99/35426
- GB-A- 2 008 227
- US-A- 4 172 583
- US-A- 4 915 892
- US-A1- 2002 074 040
- US-A1- 2002 074 040
- US-A1- 2002 117 646
- DATABASE WPI Week 200224, Derwent Publications Ltd., London, GB; Class A32, AN 2002-182341, XP003009497 & JP 2001 322141 A (UCHIYAMA KOGYO KK) 20 November 2001

## Description

### BACKGROUND OF THE INVENTION

### 1. Field of the invention

The present invention relates to a process for the manufacturing of a valve having an integrated gasket and a valve achieved through the process.

### 2. Description of related prior art

Products made of thermoplastic materials can be manufactured by a number of different manufacturing procedures. The most commonly used methods are however, injection moulding, vacuum forming, blow moulding and press moulding. Valves of butterfly and ball type has been known for some time and they can be manufactured from thermoplastic material. Here injection moulding and press moulding are the most suited manufacturing methods in order to achieve the desired precision. Butterfly valves and ball valves made of thermoplastic materials are mostly used in low pressure systems. Butterfly valves are often used in ventilation appliances where absolute closing isn't necessary. It is also possible to use the valves for fluid media. It will of course be important to have gaskets both in the valve seat as well as at the end of the valve housing. These gaskets are most often separate items which need to be assembled with the valve housing after the moulding procedure.

EP 1 362 692 A1 refers to a pipe constituted by an inner wall produced with a first high-performance thermoplastic polymeric material having a distortion temperature under load in accordance with standard HDT-A iso 75 of at least 275 °C and an outer wall produced from a second thermoplastic material belonging to the same family of chemical polymers as the high-performance thermoplastic material and coinjected therewith for production of the pipe itself.

US 2002/0074040 A1 refers to a butterfly valve, which is provided with a seat-liner, which is injection-molded directly against the valve body.

### SUMMARY OF THE INVENTION

It has through the present invention been made possible to make the manufacturing process more effective and at the same time allowing improvements in mechanical characteristics. Accordingly the invention relates to a process for the manufacturing of a valve having a rigid carrying body member and a gasket member.

According to yet one preferred embodiment of the invention the valve further incorporates a butterfly valve member. The butterfly valve member is preferably assembled with the carrying body member after having moulded gasket member and the carrying body. The butterfly valve member is preferably moulded separately.

According to an alternative embodiment of the invention the valve further incorporates a ball valve member. The ball valve member is suitably assembled with the carrying body member after having moulded gasket member and the carrying body. The ball valve member is moulded separately.

The gasket member suitably forms a sealing gasket at the point where the valve is connected to other media. The other media is suitably selected from the group consisting of; a vessel, a tube, a filling station, an emptying station and a combination thereof. The gasket member may according to one embodiment of the invention form a valve seat gasket towards the valve in a valve seat position. According to one embodiment of the invention the gasket member forms at least one sealing gasket at the point where the valve is connected to other media and a valve seat gasket towards the valve in a valve seat position. The at least one sealing gasket and the valve seat gasket are then advantageously connected to form a unit.

The gasket member is advantageously manufactured of a thermoplastic elastic material having a higher melting point then the thermoplastic material of the carrying body member. This is advantageous in cases where the gasket member is moulded first and the carrying body member is moulded with the gasket member in the mould.

According to a preferred embodiment of the invention the gasket member is manufactured of a thermoplastic elastic material having a lower melting point then the thermoplastic material of the carrying body member. This is advantageous in cases where the gasket member is moulded into the carrying body member already moulded carrying body member.

The invention also relates to a valve having a rigid carrying body member and an elastic gasket member.

### DESCRIPTION OF AN EMBODIMENT EXAMPLE

The invention is further described together with enclosed drawing showing a selected embodiment of the invention, wherein,
- figure 1 shows in perspective view a gasket member 3 manufactured according to the invention.
- figure 2 shows in perspective view a cross-section of a valve 1 manufactured according to the invention.
- figure 3 shows in perspective view a valve 1 according to the invention.

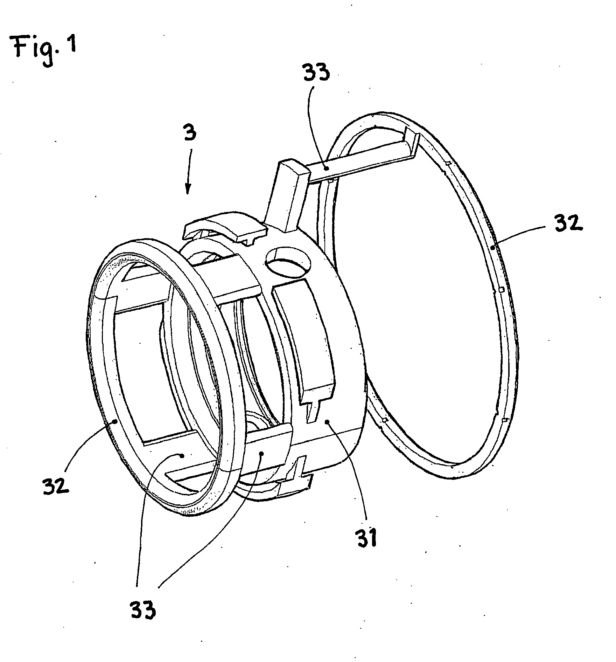

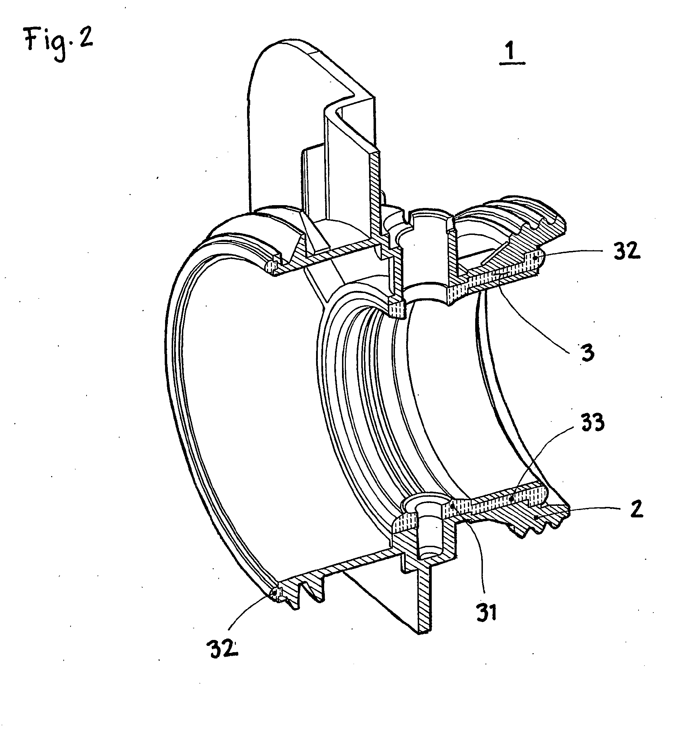

Accordingly, figure 1 shows in perspective view a gasket member 3 to a valve 1 (see figure 2) having a rigid carrying body member 2 (see figure 2) and a gasket member 3 (see also figure 2). The gasket member 3 is moulded through means of injection moulding in an elastic thermoplastic material by means of a gasket mould. Said gasket member 3 is arranged in a body member mould, said body member mould being intended for moulding the carrying body member 2 (see figure 2). A thermoplastic material is injected into said body member mould hereby mechanically integrating said gasket member 3 with said carrying body member 2 (see figure 2). The valve 1 (see figure 2) further incorporates a butterfly valve member (not shown). This butterfly valve member (not shown) is assembled with the carrying body member 2 after having moulded the gasket member 3 and the carrying body member 2. The butterfly valve member (not shown) is moulded separately. The gasket member 3 forms sealing gaskets 32 at the point where the valve is connected to other media like a vessel, a tube, a filling station, an emptying station or the like. The gasket member 3 further forms a valve seat gasket 31 towards the valve in a valve seat position. The sealing gaskets 32 and the valve seat gasket 31 are connected to form a unit via channels 33. The gasket member 3 is manufactured of a thermoplastic elastic material having a higher melting point then the thermoplastic material of the carrying body member 2.

It is advantageous to mould the carrying body member 2 prior to the gasket member 3. The carrying body member is then provided with flow channels for the gasket member material during moulding. The carrying body member 2 is then arranged in a gasket mould which is provided with surfaces giving correct shape to the gasket member. The elastic material is then injected into the gasket mould and, of course, also the intended portions of the main body member.

Figure 2 is discussed together with figure 1 above.

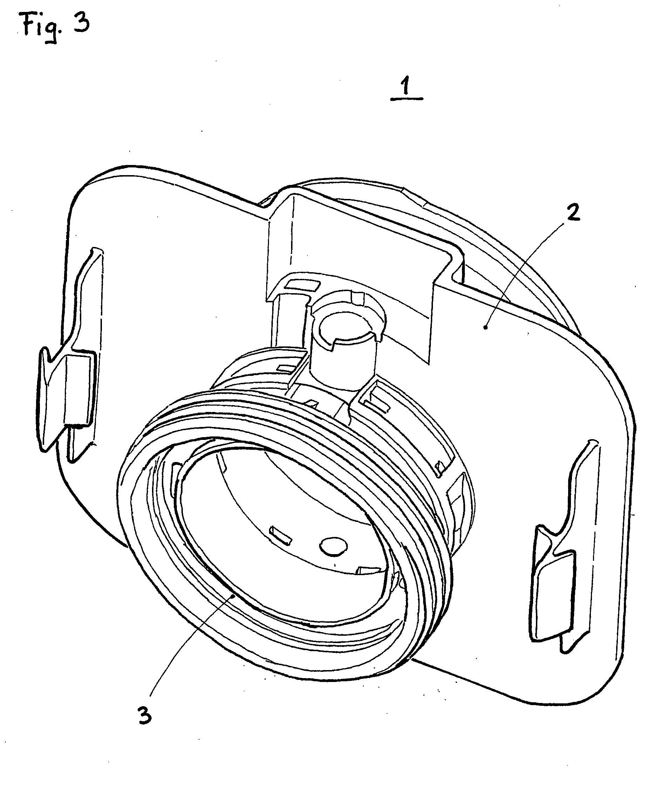

Figure 3 shows in perspective view a valve 1 according to the invention. The valve 1 has a rigid carrying body member 2 and an elastic gasket member 3. The gasket member 3 is moulded in an elastic thermoplastic material by means of a gasket mould. Said gasket member 3 is moulded into the carrying body member which has been moulded by means of a body member mould where a thermoplastic material was injected into said body member mould hereby mechanically integrating said gasket member 3 with said carrying body member 2.

## Claims

1. A process for the manufacturing of a valve (1) having a rigid carrying body member (2) and a gasket member (3) wherein the gasket member (3) is moulded through means of injection moulding in an elastic thermoplastic material by means of a gasket mould whereupon said gasket member (3) is arranged in a body member mould, said body member mould being intended for moulding the carrying body member (2), whereupon a thermoplastic material is injected into said body member mould hereby mechanically integrating said gasket member (3) with said carrying body member (2), **characterised in that** the gasket member (3) forms at least one sealing gasket (32) at the point where the valve is connected to other media and a valve seat gasket (31) towards the valve in a valve seat position wherein the at least one sealing gasket (32) and the valve seat gasket (31) are connected to form a unit, and **in that** the valve seat gasket (31) is provided with at least one undercut for mechanically bonding it towards the carrying body member (2), and **in that** the sealing gasket (32) is provided with at least one undercut for mechanically bonding it towards the carrying body member (2).

2. A process for the manufacturing of a valve (1) having a rigid carrying body member (2) and a gasket member (3) wherein the rigid carrying body member (2) is moulded through means of injection moulding in a body member mould whereupon said rigid carrying body member (2) is arranged in a gasket mould whereupon an elastic thermoplastic material is injected into the gasket mould hereby mechanically integrating said gasket member (3) with said carrying body member (2), **characterised in that** the gasket member (3) forms at least one sealing gasket (32) at the point where the valve is connected to other media and a valve seat gasket (31) towards the valve in a valve seat position wherein the at least one sealing gasket (32) and the valve seat gasket (31) are connected to form a unit and **in that** the valve seat gasket (31) is provided with at least one undercut for mechanically bonding it towards the carrying body member (2), and **in that** the sealing gasket (32) is provided with at least one undercut for mechanically bonding it towards the carrying body member (2).

3. A process according to claim 1 or 2 wherein said valve (1) further incorporates a butterfly valve member.

4. A process according to claim 3 wherein said butterfly valve member is assembled with the carrying body member (2) after having moulded gasket member (3) and the carrying body member (2).

5. A process according to claim 1 or 2 wherein said valve (1) further incorporates a ball valve member.

6. A process according to claim 5 wherein said ball valve member is assembled with the carrying body member (2) after having moulded gasket member (3) and the carrying body member (3).

7. A process according to claim 3 wherein the butterfly valve member is moulded separately.

8. A process according to claim 5 wherein the ball valve member is moulded separately.

9. A process according to claim 1 or 2 wherein the other media is selected from the group consisting of; a vessel, a tube, a filling station, an emptying station and a combination thereof.

10. A process according to any of the claims 1 - 8 wherein the gasket member (3) is manufactured of a thermoplastic elastic material having a higher melting point then the thermoplastic material of the carrying body member (2).

11. A process according to any of the claims 2-8 wherein the gasket member (3) is manufactured of a thermoplastic elastic material having a lower melting point then the thermoplastic material of the carrying body member (2).

12. A valve (1) having a rigid carrying body member (2) and an elastic gasket member (3) wherein the gasket member (3) being moulded in an elastic thermoplastic material by means of a gasket mould and that said gasket member (3) is moulded into the carrying body member by means of a body member mould where a thermoplastic material is injected into said body member mould hereby mechanically integrating said gasket member (3) with said carrying body member (2), **characterised in that** the gasket member (3) forms at least one sealing gasket (32) at the point where the valve is connected to other media and a valve seat gasket (31) towards the valve in a valve seat position, wherein the at least one sealing gasket (32) and the valve seat gasket (31) are connected to form a unit and **in that** the valve seat gasket (31) is provided with at least one undercut for mechanically bonding it towards the carrying body member (2), and **in that** the sealing gasket (32) is provided with at least one undercut for mechanically bonding it towards the carrying body member (2).

## Patentansprüche

1. Verfahren zum Herstellen eines Ventils (1) mit einem steifen Tragkörperelement (2) und einem Dichtungselement (3), wobei das Dichtungselement (3) durch Spritzgießen in ein elastisches thermoplastisches Material durch eine Dichtungsform ausgeformt wird, das Dichtungselement (3) danach in einer Körperelementform angeordnet wird, wobei die Körperelementform zum Ausformen des Tragkörperelements (2) vorgesehen ist, und danach ein thermoplastisches Material in die Körperelementform gespritzt wird, wodurch das Dichtungselement (3) mechanisch mit dem Tragkörperelement (2) verbunden wird, **dadurch gekennzeichnet, dass** das Dichtungselement (3) mindestens eine Dichtung (32) an dem Punkt, an dem das Ventil mit einer anderen Einrichtung verbunden wird, und eine Ventilsitzdichtung (31) in Richtung des Ventils in einer Ventilsitzposition ausbildet, wobei die mindestens eine Dichtung (32) und die Ventilsitzdichtung (31) zu einer Einheit verbunden sind, und dadurch, dass die Ventilsitzdichtung (31) mindestens einen Unterschnitt zum mechanischen Verbinden mit dem Tragkörperelement (2) aufweist, und dadurch, dass die Dichtung (32) mindestens einen Unterschnitt zum mechanischen Verbinden mit dem Tragkörperelement (2) aufweist.

2. Verfahren zum Herstellens eines Ventils (1) mit einem steifen Tragkörperelement (2) und einem Dichtungselement (3), bei dem das steife Tragkörperelement (2) durch Spritzgießen in eine Körperelementform ausgebildet wird, das steife Tragkörperelement (2) danach in einer Dichtungsform angeordnet wird , und danach ein elastisches thermoplastisches Material in die Dichtungsform gespritzt wird, wodurch das Dichtungselement (3) mechanisch mit dem Tragkörperelement (2) verbunden wird, **dadurch gekennzeichnet, dass** das Dichtungselement (3) mindestens eine Dichtung (32) an dem Punkt, an dem das Ventil mit einer anderen Einrichtung verbunden wird, und eine Ventilsitzdichtung (31) in Richtung des Ventils in einer Ventilsitzposition ausbildet, wobei die mindestens eine Dichtung (32) und die Ventilsitzdichtung (31) zu einer Einheit verbunden sind, und dadurch, dass die Ventilsitzdichtung (31) mindestens einen Unterschnitt zum mechanischen Verbinden mit dem Tragkörperelement (2) aufweist, und dadurch, dass die Dichtung (32) mindestens einen Unterschnitt zum mechanischen Verbinden mit dem Tragkörperelement (2) aufweist.

3. Verfahren nach Anspruch 1 oder 2, bei dem das Ventil (1) ferner ein Drehklappenelement aufweist.

4. Verfahren nach Anspruch 3, bei dem das Drehklappenelement mit dem Tragkörperelement (2) verbunden wird, nachdem das Dichtungselement (3) und das Tragkörperelement (2) ausgeformt wurden.

5. Verfahren nach Anspruch 1 oder 2, bei dem das Ventil (1) ferner ein Kugelventilelement aufweist.

6. Verfahren nach Anspruch 5, bei dem das Kugelventilelement mit dem Tragkörperelement (2) verbunden wird, nachdem das Dichtungselement (3) und das Tragkörperelement (3) ausgeformt wurden.

7. Verfahren nach Anspruch 3, bei dem das Drehklappenelement separat ausgeformt wird.

8. Verfahren nach Anspruch 5, bei dem das Kugelventilelement separat ausgeformt wird.

9. Verfahren nach Anspruch 1 oder 2, bei dem die andere Einrichtung ausgewählt wird aus der Gruppe aus: einem Behälter, einem Rohr, einer Füllstation, einer Entleerungsstation und einer Kombination davon.

10. Verfahren nach einem der Ansprüche 1 bis 8, bei dem das Dichtungselement (3) aus einem thermoplastischen elastischen Material ausgebildet wird, welches einen höheren Schmelzpunkt als das thermoplastische Material des Tragkörperelements (2) aufweist.

11. Verfahren nach einem der Ansprüche 2 bis 8, bei dem das Dichtungselement (3) aus einem thermoplastischen elastischen Material ausgebildet wird, welches einen niedrigeren Schmelzpunkt als das thermoplastische Material des Tragkörperelements (2) aufweist.

12. Ventil (1) mit einem steifen Tragkörperelement (2) und einem elastischen Dichtungselement (3), wobei das Dichtungselement (3) in ein elastisches thermoplastisches Material durch eine Dichtungsform ausgeformt wird, und das Dichtungselement (3) mit dem Tragkörperelement durch eine Körperelementform ausgeformt wird, indem ein thermoplastisches Material in die Körperelementform eingespritzt wird, wodurch das Dichtungselement (3) mechanisch mit dem Tragkörperelement (2) verbunden wird, **dadurch gekennzeichnet, dass** das Dichtungselement (3) mindestens eine Dichtung (32) an dem Punkt, an dem das Ventil mit einer anderen Einrichtung verbunden wird, und eine Ventilsitzdichtung (31) in Richtung des Ventils in einer Ventilsitzposition ausbildet, wobei die mindestens eine Dichtung (32) und die Ventilsitzdichtung (31) zu einer Einheit verbunden sind, und dadurch, dass die Ventilsitzdichtung (31) mindestens einen Unterschnitt zum mechanischen Verbinden mit dem Tragkörperelement (2) aufweist, und dadurch, dass die Dichtung (32) mindestens einen Unterschnitt zum mechanischen Verbinden mit dem Tragkörperelement (2) aufweist.

## Revendications

1. Processus de fabrication d'une vanne (1) ayant un élément de corps porteur rigide (2) et un élément de joint (3) dans lequel l'élément de joint (3) est moulé par l'intermédiaire de moyens de moulage par injection dans un matériau thermoplastique élastique au moyen d'un moule de joint après quoi ledit élément de joint (3) est agencé dans un moule d'élément de corps, ledit moule d'élément de corps étant destiné à mouler l'élément de corps porteur (2), après quoi un matériau thermoplastique est injecté dans ledit moule d'élément de corps, ce qui permet d'intégrer mécaniquement ledit élément de joint (3) audit élément de corps porteur (2), **caractérisé en ce que** l'élément de joint (3) forme au moins un joint d'étanchéité (32) au niveau du point où la vanne est reliée à un autre support et un joint de siège de vanne (31) en direction de la vanne dans une position de siège de vanne, où l'au moins un joint d'étanchéité (32) et le joint de siège de vanne (31) sont reliés pour former une unité, et **en ce que** le joint de siège de vanne (31) est pourvu d'au moins une contre-dépouille destinée à le lier mécaniquement à l'élément de corps porteur (2), et **en ce que** le joint d'étanchéité (32) est pourvu d'au moins une contre-dépouille destinée à le lier mécaniquement à l'élément de corps porteur (2).

2. Processus de fabrication d'une vanne (1) ayant un élément de corps porteur rigide (2) et un élément de joint (3) dans lequel l'élément de corps porteur rigide (2) est moulé par l'intermédiaire de moyens de moulage par injection dans un moule d'élément de corps, après quoi ledit élément de corps porteur rigide (2) est agencé dans un moule de joint après quoi un matériau thermoplastique élastique est injecté dans le moule de joint, ce qui permet d'intégrer mécaniquement ledit élément de joint (3) audit élément de corps porteur (2), **caractérisé en ce que** l'élément de joint (3) forme au moins un joint d'étanchéité (32) au niveau du point où la vanne est reliée à un autre support et un joint de siège de vanne (31) en direction de la vanne dans une position de siège de vanne, où l'au moins un joint d'étanchéité (32) et le joint de siège de vanne (31) sont reliés pour former une unité, et **en ce que** le joint de siège de vanne (31) est pourvu d'au moins une contre-dépouille destinée à le lier mécaniquement à l'élément de corps porteur (2), et **en ce que** le joint d'étanchéité (32) est pourvu d'au moins une contre-dépouille destinée à le lier mécaniquement à l'élément de corps porteur (2).

3. Processus selon la revendication 1 ou 2, dans lequel ladite vanne (1) comprend en outre un élément de vanne papillon.

4. Processus selon la revendication 3, dans lequel ledit élément de vanne papillon est assemblé avec l'élément de corps porteur (2) après avoir moulé l'élément de joint (3) et l'élément de corps porteur (2).

5. Processus selon la revendication 1 ou 2, dans lequel ladite vanne (1) comprend en outre un élément de vanne à bille.

6. Processus selon la revendication 5, dans lequel ledit élément de vanne à bille est assemblé avec l'élément de corps porteur (2) après avoir moulé l'élément de joint (3) et l'élément de corps porteur (3).

7. Processus selon la revendication 3, dans lequel l'élément de vanne papillon est moulé séparément.

8. Processus selon la revendication 5, dans lequel l'élément de vanne à bille est moulé séparément.

9. Processus selon la revendication 1 ou 2, dans lequel l'autre support est choisi dans le groupe constitué : d'un récipient, d'un tube, d'une station de remplissage, d'une station de vidange et d'une combinaison de ceux-ci.

10. Processus selon l'une des revendications 1 à 8, dans lequel l'élément de joint (3) est fabriqué d'un matériau élastique thermoplastique ayant un point de fusion supérieur à celui du matériau thermoplastique de l'élément de corps porteur (2).

11. Processus selon l'une des revendications 2 à 8, dans lequel l'élément de joint (3) est fabriqué d'un matériau élastique thermoplastique ayant un point de fusion inférieur à celui du matériau thermoplastique de l'élément de corps porteur (2).

12. Vanne (1) ayant un élément de corps porteur rigide (2) et un élément de joint élastique (3) dans laquelle l'élément de joint (3) étant moulé dans un matériau thermoplastique élastique au moyen d'un moule de joint et ledit élément de joint (3) est moulé dans l'élément de corps porteur au moyen d'un moule d'élément de corps où un matériau thermoplastique est injecté dans ledit moule d'élément de corps, ce qui permet d'intégrer mécaniquement ledit élément de joint (3) audit élément de corps porteur (2), **caractérisée en ce que** l'élément de joint (3) forme au moins un joint d'étanchéité (32) au niveau du point où la vanne est reliée à un autre support et un joint de siège de vanne (31) en direction de la vanne dans une position de siège de vanne, où l'au moins un joint d'étanchéité (32) et le joint de siège de vanne (31) sont reliés pour former une unité, et **en ce que** le joint de siège de vanne (31) est pourvu d'au moins une contre-dépouille destinée à le lier mécaniquement à l'élément de corps porteur (2), et **en ce que** le joint d'étanchéité (32) est pourvu d'au moins une contre-dépouille destinée à le lier mécaniquement à l'élément de corps porteur (2).
